# EUROPEAN PATENT APPLICATION

(11) **EP 1 029 481 A2**
(43) Date of publication of application: **23.08.2000**
(21) Application number: 00102325.8
(22) Date of filing: 03.02.2000
(51) Int. Cl.: A47G 23/02, C02F 1/48

(54) **Container for holding bottles or the like comprising means for reactivating the contained alimentary liquids**

(30) Priority: 15.02.1999 IT VR990005 U
(71) Applicant: Olivieri, Antonio, 37033 Montorio Veronese (Verona) (IT)
(72) Inventor: Olivieri, Antonio, 37033 Montorio Veronese (Verona) (IT)
(74) Representative: Savi, Alberto

(57) **Abstract**

In general, the present system utilizes containers for holding bottles and takes advantage of special properties of either opposite magnetic fields or non-magnetic fields in order to reactivate the properties of the beverage contained in the bottle (4) and to make the beverage itself equal or at least similar to its initial physical conditions. The system consists in applying either a series of magnetic bands or one or more flexible panels or a sheet or leaf (7) made of a magnetic material or the like inside an empty interspace (6) of a bottle container (1).

The property of the magnetic elements (7) is to reactivate the mineral salts and the substances dissolved in the liquid contained in the inserted bottle (4) because such substances had lost their original charge owing to their conditions of narrowness and closure inside the bottle (4).

## Description

The present invention proposes a container for holding bottles or the like. The peculiarity of this container is to comprise means for reactivating alimentary liquids such as water, wine, soft drinks, fruit juices, and even alcoholic drinks contained in the bottles.

This system is conceptually new and may be applied to the containers for holding bottles or the like.

In general, the present system utilizes containers for holding bottles and takes advantage of special properties of either opposite magnetic fields or non-magnetic fields in order to reactivate the properties of the beverage contained in the bottle and to make the beverage itself equal or at least similar to its initial physical conditions.

As is known, the alimentary beverages such as water, wine, soft drinks, fruit juices or any other similar liquid food must be poured in bottles or other equivalent containers in order to be marketed and consumed.

On the market there is a great variety of containers made of different materials although glas or plastic materials are usually utilized. Aluminium-based materials are also used.

It has been found that the beverages contained in their respective bottles or the like lose their characteristic physical properties while their organoleptic properties remain unchanged.

In practice, all the molecules, substances and ions of the mineral salts dissolved in the bottled beverage lose their original mobility and remain inert and motionless owing to their conditions of narrowness and closure in their bottle.

The molecular "immobility" affects the quality, freshness and deliciousness of the beverage which does not offer its original physical characteristics and properties any more. The beverage loses its taste and becomes less pleasant because it has no more the characteristics it had before the bottling.

For instance, it has been found that the light water has different degrees of density and viscosity which affect its freshness and taste.

Mountain spring water has been tested at the rock outlet.

The spring water appears to be fresh and with a nice taste when drinking it. It has been found that this water has a better fluidity than that of the bottled water that stands still.

In fact, the still water contains many H₂O molecules concatenated to each other as in a honeycomb while the fresh water contains very mobile molecules which are not concatenated to each other. Accordingly, the water density is different.

The aim of the present invention is to propose a system for "revitalizing" water, alcoholic drinks and any beverages contained in bottles or other similar objects, which system utilizes a bottle holding container equipped with a particular element which permits a stimulation of the molecular charges of the substances dissolved by generating a suited magnetic field inside the container. In particular, the revitalized water is like spring water with all its benefits.

The system utilizes common bottle containers which are provided with an empty hollow space for the heat insulation in which according to the present invention an element is introduced and has physical properties such that the dissolved substances, which had lost their original charges, are reativate.

A system according to the present invention is therefore carried out by using very simple inexpensive means and its rapid diffusion is to be expected, also on a large scale.

An immediate advantage of this new system for reactivating bottled beverage is to restore the original conditions of the beverages. This advantage is very important because it permits to enjoy the original taste of the beverage.

All the above-indicated particular aims and advantages are reached according to the present invention by means of a container for holding bottles or the like, which container comprises means for reactivating the contained alimentary liquids, characterized by the fact that at least one or more magnetic bands or a sheet or a plate or a flexible panel made of a magnetic material, or permanent magnets of a certain capacity or the like, also with opposite charges are introduced inside the empty hollow space of the bottle container, and by the fact that the said magnetic bands, sheets, plates or panels occupy the whole peripheral cylindrical surface of the bottle container preferably and/or the bottom of the bottle container.

The magnetic field generated by the said magnetic bands or sheets or panels, also with opposite charges, arranged inside the bottle container acts on the beverage contained in the bottle if the bottle is inserted in the bottle container and stimulates the ion charge of the dissolved substances. In this way, the substances are reactivated.

The invention will be better understood on the base of the following description, given as a mere non-limiting example, with reference to the accompanying drawings, wherein:
- Figure 1 shows a schematical perspective view of a bottle container according to the present invention on the whole including a magnetic element which may have opposite charges and is arranged in the empty hollow space;
- Figure 2 shows a schematical elevation of the bottle container which is provided with a magnetic hollow space which acts on the liquid of the contained bottle;
- Figure 3 shows a schematic view of a magnetic sheet or panel which is inserted inside the hollow space of the bottle container;
- Figure 4 shows a schematic view of a pair of magnetic panels which may have opposite charges;
- Figure 5 shows a schematical view of a type of magnetic element which is formed by a series of permanent magnets and/or multiple magnetic bands, which may have opposite charges.

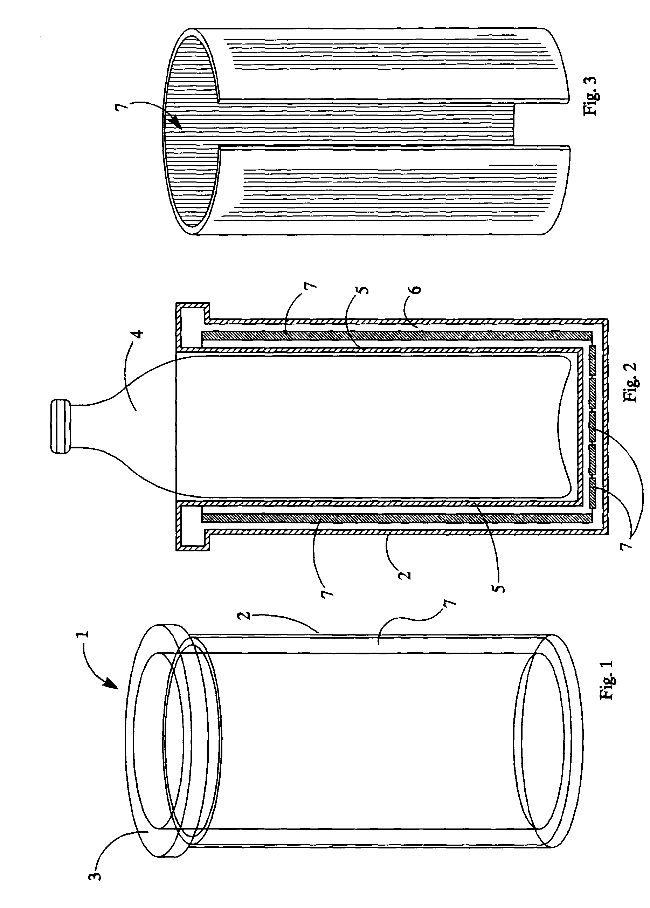

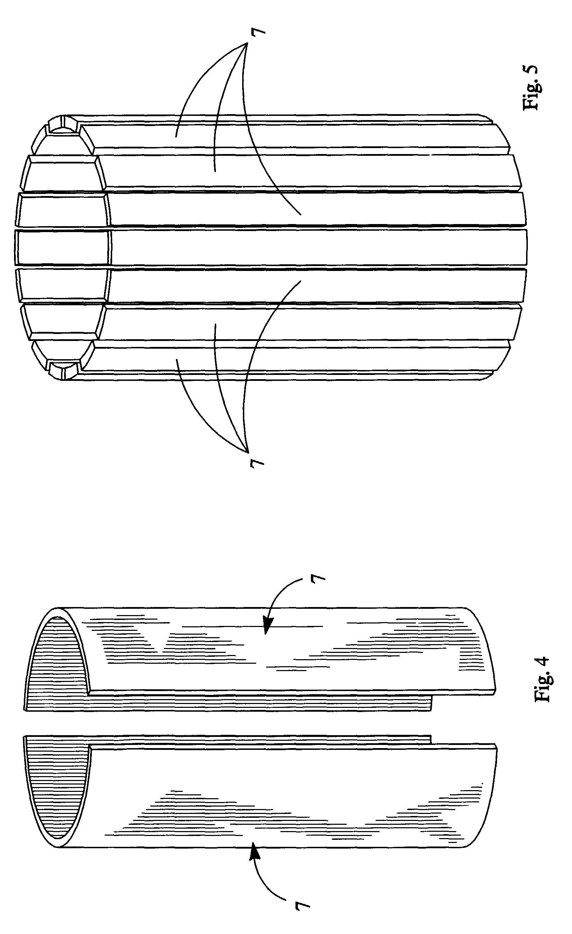

With reference to the accompanying figures, number 1 denotes a bottle container on the whole according to the present invention.

The bottle container 1 consists basically of an essentially cylindrical body 2 showing a base and an upper opening 3.

A bottle 4 is inserted through the upper opening 3. The container must be insulated thermally in order to keep the wished temperature and reactivated according to the above-specified purposes.

Inside the cylindrical wall of the body 2 there is provided a further wall 5 which is concentric and on a scale in respect to the outer wall so that an empty interspace 6 is obtained to permit a heat insulation of the contained bottle.

The peculiarity of the invention consists in introducing a series of magnetic bands, or one or more flexible panels, or a sheet or a leaf 7 made of a magnetic material or the like in the inside of the empty interspace 6.

For instance, the substance of the magnetic panel or bands 7 may comprise permanent magnets of rare earths such as Neodymium-Iron-Boron or other similar magnetic material suited to the aim of the invention.

Preferably, the magnetic panel 7 is a flexible type so that it can be cut and shaped according to the form of the interspace in which the panel has to be inserted.

In fact, the form of the interspace may vary depending on the several patterns of bottle container on the market.

On the contrary, the magnetic band may be a rigid or semi-rigid type because more magnetic bands may be put side by side vertically. The magnetic bands may be arranged also on the bottom of the bottle container according to opposite polarities.

The magnetic panel 7 or the magnetic bands or the like are fixed to both the inner wall 5 and the bottom so that all the magnetic elements adhere to the inner part of the container preferably and are arranged as near as possible to the bottle with its content.

Concerning the construction, the panel 7 or the magnetic bands or the like are inserted in the bottle container either through the opening 3 if the panel is adapted to an existing bottle container or during the assembly of the bottle container.

As said above, this solution permits to obtain the advantage of a new system for reactivating bottled beverages since thanks to this system it is possible to restore the original conditions of the beverages, which is very important because it permits to enjoy the original taste of the beverage.

The so-described solution permits that in the beverage contained in the bottle, in particular in the water, the contained salts dissolve much more rapidly and the chemical reactions appear to be quicker, the water being the reagent. Concerning the physical situation, owing to the interruption of the intermolecular linkages, the energetic content of the water molecule is modified since the fluider the water, the more energetic it is as just taken from the source, with all the resulting advantages.

The so-described bottle container may be advantageously larger in order to contain more bottles which are then taken out and served on the table in an optimum condition of regeneration of the contained beverages.

Another possibility of application of the present device is to introduce the panel 7 or the magnetic bands or the like in both single and multiple containers suited to contain smaller bottles such as half a litre bottles or the like. The containers may be portable and also for the containment of tins or the like.

A technician of this field can make changes and variants in the described invention and obtain solutions to be considered as included in the scope of protection of the present invention as described in the following claims.

## Claims

1. Bottle container (1) or the like comprising means for reactivating the contained alimentary liquids, characterized by the fact that at least a leaf or a sheet or a flexible panel or a series of bands (7) made of a magnetic material or the like and arranged also with opposite charges, are inserted inside an empty interspace (6) of the bottle container, and by the fact that the said leaf or sheet or panel or bands occupy preferably the whole peripheral cylindrical surface of the bottle container and/or its bottom.

2. Bottle container (1) or the like as claimed in claim 1, characterized by the fact that the magnetic field generated by the said sheet or panel or bands present inside the bottle container produce a beneficial effect on the beverage contained in the bottle inserted in the bottle container and stimulate the ion charge of the dissolved substances on reactivating them.

3. Bottle container (1) or the like as claimed in the foregoing claims, characterized by the fact that the material of the said magnetic bands or panel (7) may be for instance magnets of rare earths of Neodymium-Iron-Boron or other similar magnetic material of high capacity suited to the same purpose of the invention.

4. Bottle container (1) or the like as claimed in the foregoing claims, characterized by the fact that the said magnetic panel (7) is preferably a flexible type so that it can be cut and shaped according to the form of the interspace (6) in which the panel is inserted, which form varies depending on the pattern of bottle container.

5. Bottle container (1) or the like as claimed in the foregoing claims, characterized by the fact that the magnetic field may be produced in the bottle container by means of magnetic bands or other more suited system. including the induced magnetism.

6. Bottle container (1) or the like as claimed in the foregoing claims, characterized by the fact that the said magnetic bands, panels (7) or the like are fixed to the inner wall (5) of the bottle container so that they adhere preferably to the inner wall and are arranged as near as possible to the bottle (4) with its content.

7. Bottle container (1) or the like as claimed in the foregoing claims, characterized by the fact that concerning the construction, the insertion of the panel (7) in the bottle container may be accomplished either through the opening (3) if the panel is adapted to an existing bottle container, or during the assembly of the bottle container.
